# FASCICULE DE BREVET EUROPEEN

(11) **EP 4 504 472 B1**
(45) Date de publication et mention de la délivrance du brevet: **25.02.2026**
(21) Numéro de dépôt: 23719047.5
(22) Date de dépôt: 28.03.2023
(51) Int. Cl.: B28B 1/26, B28B 7/36, B28B 23/00, C04B 35/565, C04B 35/80, C04B 35/638

(54) **PROCEDE DE DENSIFICATION D'UNE TEXTURE FIBREUSE PAR INJECTION DE BARBOTINE**
VERFAHREN ZUR VERDICHTUNG EINER FASERIGEN TEXTUR DURCH INJEKTION EINES SCHLICKERS
METHOD FOR DENSIFYING A FIBROUS TEXTURE BY INJECTING A SLIP

(30) Priorité: 04.04.2022 FR 2203041
(43) Date de publication de la demande: 12.02.2025
(73) Titulaire: Safran Ceramics, 33185 Le Haillan (FR)
(72) Inventeur: EBERLING-FUX, Nicolas, 77550 MOISSY-CRAMAYEL (FR); ROUSSILLE, Clément, Marie, Benoît, 77550 MOISSY-CRAMAYEL (FR); BAZERQUE, Mélissa, 77550 MOISSY-CRAMAYEL (FR); CARMINATI, Paul, 77550 MOISSY-CRAMAYEL (FR)
(74) Mandataire: Cabinet Beau de Loménie
(86) Numéro de dépôt international: PCT/FR2023/050442
(87) Numéro de publication internationale: WO 2023/194673

(56) Documents cités:
- WO-A1-2018/234669
- WO-A1-2018/234669
- WO-A1-2019/197757
- WO-A1-2019/197757

## Description

### Domaine Technique

La présente invention se rapporte au domaine général de la fabrication de pièces en matériau composite à matrice céramique (CMC), et plus particulièrement à un procédé de densification d'une texture fibreuse en matériau céramique comprenant une matrice céramique.

### Technique antérieure

La densification d'une texture fibreuse, c'est-à-dire la formation d'une matrice céramique dans la texture fibreuse, comprend une étape d'injection de barbotine qui consiste à imprégner la texture fibreuse par une suspension de particules céramiques ou barbotine qui pénètre dans la porosité de la texture fibreuse et permet l'obtention d'une matrice céramique dans la texture fibreuse.

Pour améliorer les propriétés aérodynamiques de la pièce finale, il est nécessaire de disposer d'une texture fibreuse densifiée ayant une surface lisse. Généralement, pour obtenir une surface lisse, on lisse par usinage la surface de la texture fibreuse densifiée, ou on lisse sa surface en y ajoutant de la matière (surépaisseur). Néanmoins, cela entraîne des coûts supplémentaires, peut diminuer la résistance thermomécanique du matériau, et surtout complexifie le procédé de fabrication du composite à matrice céramique.

Il est donc souhaitable de disposer d'un nouveau procédé de densification d'une texture fibreuse permettant d'obtenir une préforme fibreuse densifiée ayant une surface lisse sans générer de surépaisseur et sans étape supplémentaire d'usinage de la surface.

Le document WO 2018/234669 décrit un procédé de fabrication d'une pièce en matériau céramique présentant des variations locales d'épaisseur à l'aide d'un outillage d'imprégnation d'une texture fibreuse destinée à former la future pièce. L'outillage comprend une membrane imperméable ayant une portion conformée à la forme correspondant aux épaisseurs locales de la texture fibreuse, afin de répartir de manière homogène la solution d'imprégnation au sein de la texture fibreuse.

### Exposé de l'invention

L'invention concerne un procédé de densification d'une texture fibreuse en matériau céramique à matrice céramique mis en œuvre dans un outillage d'injection comprenant :
- une cavité de moulage définie entre un moule et un contre-moule, la cavité de moulage définissant un volume interne, et
- une membrane comprenant une zone rigidifiée, la membrane étant destinée à être placée entre une texture fibreuse présente dans la cavité de moulage et le contre-moule et la zone rigidifiée de la membrane ayant un module d'Young supérieur à 200 GPa,
le procédé comprenant :
- le placement d'une texture fibreuse pré-densifiée dans la cavité de moulage, la texture fibreuse pré-densifiée présentant des ondulations en surface et le placement de la membrane sur la texture fibreuse pré-densifiée de manière à ce que la zone rigidifiée de la membrane soit en contact avec le sommet des ondulations de la texture fibreuse pré-densifiée,
- la fermeture de l'outillage d'injection en plaçant le contre-moule sur la membrane et l'application d'une pression de compaction sur la membrane de manière à maintenir la zone rigidifiée de la membrane en contact avec le sommet des ondulations de la texture fibreuse pré-densifiée, et
- la densification de la texture fibreuse pré-densifiée par infiltration d'une barbotine dans la porosité de la texture fibreuse pré-densifiée, la barbotine étant injectée dans la chambre de moulage latéralement à la zone rigidifiée de la membrane sous une pression d'injection, telle que la différence de pression entre la pression de compaction et la pression d'injection est comprise entre 0,5.10⁵ Pa et 6.10⁵ Pa.

Le fait que la zone rigidifiée a un module d'Young supérieur à 200 GPa permet d'avoir une zone rigidifiée suffisamment rigide pour qu'elle ne se déforme pas durant l'application de la pression de compaction sur la membrane et la densification de la texture fibreuse.

Grâce au procédé de l'invention, notamment au fait que l'on place la zone rigidifiée de la membrane au sommet des ondulations de la texture fibreuse et que la zone rigidifiée a un module d'Young supérieur à 200 GPa, on peut lisser la surface de la texture fibreuse lors de sa densification tout en évitant la création de surépaisseur (la surépaisseur générée par la croissance de la matrice est très limitée, au maximum elle atteint 0,05 mm). En effet, la croissance de matrice, c'est-à-dire la densification de la texture fibreuse, s'arrête à la zone rigidifiée de la membrane, ce qui évite la formation de surépaisseur en surface de la texture fibreuse. Le volume de la matrice ainsi formée est donc restreint jusqu'aux ondulations les plus élevées de la texture fibreuse pré-densifiée.

De plus, le fait d'avoir une différence de pression entre la pression de compaction et celle d'injection comprise entre 0,5 bars et 6 bars (soit entre 0,5.10⁵ Pa et 6.10⁵ Pa) permet à la zone rigidifiée de la membrane de rester en contact uniquement avec les sommets des ondulations de la texture fibreuse. Ainsi, cette zone rigidifiée n'épouse pas les contours de la texture et ne se déforme pas lors de la croissance de la matrice dans la porosité de la texture fibreuse. Cette plage de différence de pression permet d'obtenir une préforme fibreuse, c'est-à-dire une texture fibreuse densifiée, ayant une surface lisse.

Par ailleurs, la texture fibreuse est déjà pré-densifiée quand elle est placée dans la cavité de moulage afin qu'elle ne puisse plus se déformer. Autrement dit, la texture fibreuse est consolidée avant son introduction dans la cavité de moulage. Cela permet d'en augmenter la tenue mécanique pour éviter qu'elle ne se déforme. Cela permet également d'étendre la gamme de pression de compaction, et d'avoir une pression de compaction comprise entre 0,5 bar et 6 bars, ce qui n'est pas possible sur un renfort déformable.

L'injection de la barbotine latéralement à la zone rigidifiée de la membrane dans la chambre de moulage et dans la porosité de la texture fibreuse pré-densifiée peut être réalisée à débit imposé ou à pression imposée de telle sorte que la différence de pression entre la pression de compaction et la pression d'injection soit maintenue constante durant toute l'injection. Lorsque l'injection a lieu à débit imposé, on peut suivre le profil de pression, notamment sa montée avec l'augmentation de la résistance à l'écoulement lors de la croissance de la matrice, pour vérifier que la différence de pression entre la pression de compaction et la pression d'injection reste constante.

Selon une caractéristique particulière de l'invention, la zone rigidifiée de la membrane est formée par un clinquant métallique placé sur une surface de la membrane en regard de la texture fibreuse.

Selon une autre caractéristique particulière de l'invention, le clinquant métallique est en molybdène ou en Inconel^{®}.

Selon une autre caractéristique particulière de l'invention, le clinquant métallique comprend un anti-adhésif sur une surface en vis-en-vis de la texture fibreuse.

Selon une autre caractéristique particulière de l'invention, le procédé comprend également, avant son placement, le traitement du clinquant métallique par un anti-adhésif sous forme de spray ou de film autocollant.

L'anti-adhésif est par exemple un film de polytétrafluoroéthylène (PTFE).

La présence d'un anti-adhésif sur le clinquant métallique permet de limiter les arrachements de matière.

Selon une autre caractéristique particulière de l'invention, la zone rigidifiée de la membrane est formée par un insert métallique ou un textile internes à la membrane. Autrement dit, un insert métallique ou un textile est présent entre les surfaces interne et externe de la membrane. Le textile est par exemple un textile consolidé formé de fibres tissées, par exemple un textile fin en deux dimensions, en carbone ou en verre qui peut être intégré lors du coulage de la membrane. L'insert métallique est par exemple un insert en Inconel^{®}, molybdène ou en acier.

Selon une autre caractéristique particulière de l'invention, la différence de pression entre la pression de compaction et celle d'injection est comprise entre 0,5.10⁵ Pa et 1,5.10⁵ Pa (soit entre 0,5 bars et 1,5 bars).

Cela permet d'améliorer le lissage de la surface de la texture fibreuse après sa densification.

Selon une autre caractéristique particulière de l'invention, la zone rigidifiée de la membrane a une épaisseur comprise entre 50 µm et 100 µm.

Selon une autre caractéristique particulière de l'invention, l'épaisseur de la zone rigidifiée de la membrane est supérieure à 50 µm, par exemple comprise entre 0,05 mm et 0,5 mm, notamment entre 0,05 mm et 0,1 mm. Cela est notamment le cas lors de la densification d'une texture fibreuse ayant une surface plane. Ces matériaux et/ou ces plages d'épaisseur pour la zone rigidifiée permettent d'avoir une zone suffisamment rigide pour que cette zone ne se déforme pas lors de son plaquage sur la texture fibreuse et lors de la croissance de la matrice dans la texture fibreuse, et suffisamment souple pour qu'elle puisse épouser les singularités géométriques des pièces et être maintenue en contact avec le sommet des ondulations de la texture fibreuse en tout point.

Selon une autre caractéristique particulière de l'invention, hors de sa zone rigidifiée, la membrane a une épaisseur comprise entre 1,5 mm et 4 mm et une dureté comprise entre 30 Shore A et 60 Shore A.

Cela permet d'avoir une membrane appliquant la pression de compaction de manière homogène sur sa zone rigidifiée sans gêner l'injection de barbotine.

Selon une autre caractéristique particulière de l'invention, le procédé comprend également le séchage de la texture fibreuse densifiée et le démoulage de la texture fibreuse densifiée après la densification.

Selon une autre caractéristique particulière de l'invention, le séchage est réalisé dans le moule avant le démoulage ou hors du moule après le démoulage en étuve, en enceinte climatique ou par lyophilisation (ou « Freeze Drying » en anglais).

Le séchage en étuve ou en enceinte climatique est par exemple réalisé à une température comprise entre 40 °C et 80 °C. De plus, de manière préférentielle, l'étuve ou l'enceinte climatique a une humidité relative comprise entre 40 % et 90 % pour limiter les fissurations.

Selon une autre caractéristique particulière de l'invention, la barbotine comprend des charges céramiques avec un taux compris entre 5 % et 50 % du volume, par exemple entre 15 % et 25 % du volume, un liant avec un taux compris entre 0 % et 20 % en masse et un plastifiant avec un taux compris entre 0 % et 20 % en masse.

Les charges céramiques comprennent par exemple des particules de carbure de silicium SiC de d50 inférieur à 2 µm. Le liant est par exemple de l'alcool polyvinylique (PVA), ou du polyéthylène glycol (PEG) ou du glycerol. Le plastifiant est par exemple du polyéthylène glycol 200 (PEG 200).

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique, un procédé de densification d'une texture fibreuse en matériau céramique et à matrice céramique selon un mode de réalisation de l'invention.
[Fig. 2A] La figure 2A représente, de manière schématique et partielle, une vue éclatée d'un outillage d'injection pour la mise en œuvre du procédé de densification selon un mode de réalisation de l'invention.
[Fig. 2B] La figure 2B représente, de manière schématique et partielle, une coupe de l'outillage d'injection de la figure 2A.
[Fig. 3] La figure 3 représente, de manière schématique et partielle, un clinquant métallique en contact avec le sommet des ondulations d'une texture fibreuse pré-densifiée présente dans un outillage d'injection pour la mise en œuvre de l'invention.

### Description des modes de réalisation

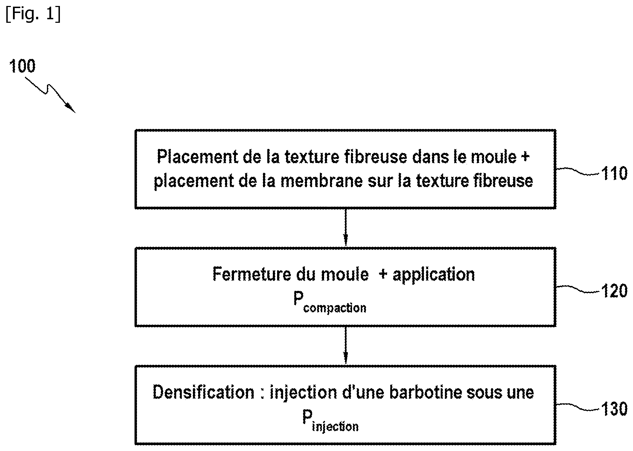

La figure 1 représente, de manière schématique, un procédé 100 de densification d'une texture fibreuse en matériau céramique et à matrice céramique selon un mode de réalisation de l'invention.

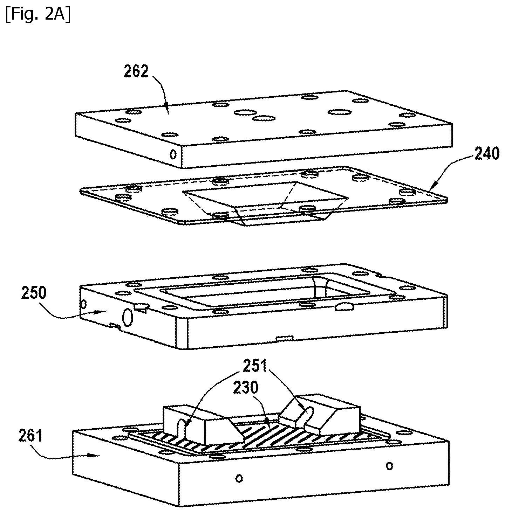

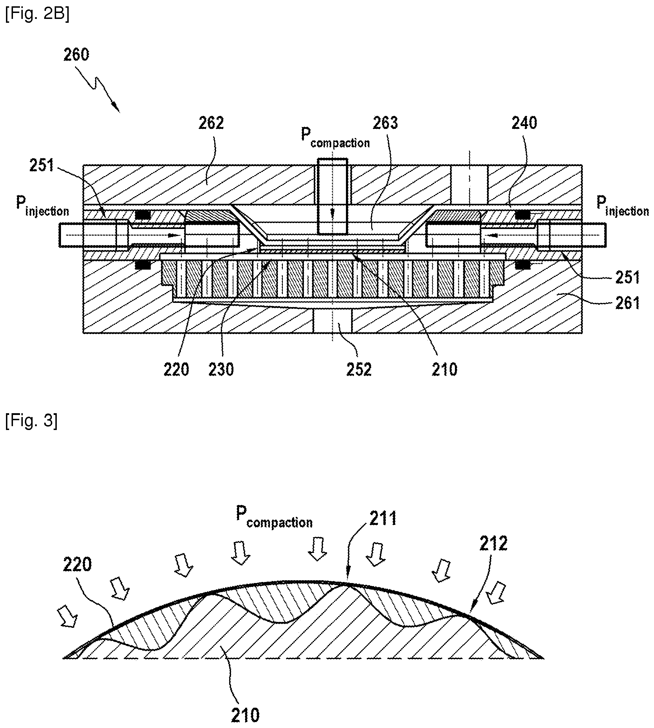

Les figures 2A, 2B et 3 représentent de manière schématique et partielle l'outillage d'injection 260 comprenant une texture fibreuse 210 pour la mise en œuvre du procédé 100 illustré en figure 1.

L'outillage d'injection 260 comprend une cavité de moulage 263 définie entre un moule 261 et un contre-moule 262. La cavité de moulage 263 définit ainsi un volume interne. L'outillage d'injection 260 comprend également une membrane 240 destinée à être placée entre une texture fibreuse 210 présente dans la cavité de moulage 263 et le contre-moule 262. La membrane 240 comprend une zone rigidifiée 220. Dans cet exemple de réalisation, la zone rigidifiée 220 est formée par un clinquant métallique présent sur la surface de la membrane 240 en vis-à-vis de la texture fibreuse 210. Dans le reste de la description de ces figures, on notera donc simplement « clinquant métallique » la zone rigidifiée 220 de la membrane 240.

A l'exception de la zone comprenant le clinquant métallique 220, la membrane 240 peut avoir une épaisseur comprise entre 1,5 mm et 4 mm. Elle peut avoir une dureté comprise entre 30 shA et 60 shA. La membrane 240 a par exemple une dureté de 50 shA et une épaisseur de 4 mm, afin de favoriser une bonne gestion des étanchéités entre le contre-moule 262/moule 261 et la membrane 240.

L'outillage 260 comprend également deux ports d'injection 251 d'une barbotine dans la cavité de moulage 263 et un port de sortie 252 configuré pour éliminer une phase liquide de la barbotine injectée. Il peut également comprendre une cale d'injection 250 qui permet de caler la membrane 240 et la texture fibreuse 210 afin de ne pas gêner l'injection de barbotine et son imprégnation dans la texture 210.

L'outillage d'injection 260 comprend également un élément filtrant 230 présent dans la cavité de moulage 263 sous la texture fibreuse 210. Cet élément filtrant 230 est configuré pour filtrer une phase liquide de la barbotine injectée dans la cavité de moulage 263. La phase liquide filtrée par l'élément filtrant 230 peut être éliminée par le port de sortie 252.

Le procédé 100 de densification comprend le placement 110 d'une texture fibreuse pré-densifiée 210 dans la cavité de moulage 263 d'un outillage d'injection 260, ainsi que le placement de la membrane 240 sur la texture fibreuse pré-densifiée 210. La texture fibreuse pré-densifiée 210 présente des ondulations 211, 212 en surface (représentées en figure 3). Il y a par exemple jusqu'à 0,3 mm de différence entre le sommet d'une ondulation 211, 212 et le point le plus bas de l'ondulation. Le clinquant métallique 220 de la membrane 240 est placé sur la texture fibreuse 210 de manière à ce qu'il soit en contact avec le sommet des ondulations 211, 212 de la texture fibreuse 210. Le clinquant métallique 220 n'est en contact qu'avec le sommet des ondulations et non avec le point le plus bas situé par exemple à 0,3 mm du sommet.

Le clinquant métallique 220 est par exemple en molybdène, en acier ou en Inconel^{®}. Il présente un module d'Young supérieur à 200 GPa, et peut avoir une épaisseur comprise entre 50 µm et 100 µm, par exemple 100 µm. Le clinquant métallique 220 peut également comprendre un anti-adhésif sur sa surface en vis-à-vis de la texture fibreuse 210.

Puis, le procédé 100 comprend la fermeture 120 de l'outillage d'injection 260 en plaçant le contre-moule 262 sur la membrane. Une pression de compaction P_{compaction} est appliquée sur la membrane 240 de manière à ce que le clinquant métallique 220 reste en contact avec le sommet des ondulations 211, 212 de la texture fibreuse pré-densifiée 210.

La pression de compaction P_{compaction} est par exemple appliquée sur le clinquant métallique 220 via la membrane 240 par une pression d'air ou par une pression d'un autre fluide, comme par exemple une huile silicone.

Enfin, le procédé 100 comprend la densification 130 de la texture fibreuse pré-densifiée 210 par infiltration d'une barbotine dans la porosité de la texture fibreuse pré-densifiée 210. La barbotine est injectée par les ports d'injection 251 de l'outillage d'injection 260 dans la cavité de moulage 263 latéralement à la membrane 240, en particulier latéralement au clinquant métallique 220 sous une pression d'injection P_{injection}. La texture fibreuse densifiée forme ainsi une préforme fibreuse comprenant une matrice.

Les valeurs des pressions d'injection et de compaction, P_{injection}, P_{compaction} sont définies de manière à ce que la différence de pression ΔP entre la pression de compaction et la pression d'injection (ΔP = P_{compaction} - P_{injection}) soit comprise entre 0,5 bars et 6 bars (soit en pascal, entre 0,5.10⁵ Pa et 6.10⁵ Pa). La différence de pression ΔP est par exemple comprise entre 0,5 bars et 1,5 bars, elle est par exemple de 1 bar.

La pression d'injection P_{injection} peut par exemple être comprise entre 3 bars et 20 bars.

La pression de compaction P_{compaction} peut par exemple être comprise entre 0,5 bar et 6 bars.

Durant l'injection 130 de la barbotine, les valeurs de pression de compaction P_{compaction} et d'injection P_{injection} peuvent varier, ainsi le procédé 100 peut comprendre le suivi de la différence de pression ΔP durant toute l'injection 130 de manière à maintenir la différence de pression ΔP dans la plage 0,5 bars à 6 bars, ou dans une plage plus restreinte, par exemple entre 0,5 bars et 1,5 bars.

Le procédé 100 peut également comprendre le séchage de la texture fibreuse 210 densifiée et son démoulage. Le séchage peut avoir lieu avant ou après le démoulage de la texture fibreuse densifiée. Par exemple, le séchage a lieu dans le moule avant le démoulage, ou hors du moule après le démoulage. Quand le séchage a lieu hors du moule, il peut être réalisé dans une enceinte climatique, dans une étuve ou encore par lyophilisation (ou Freeze Drying en anglais).

Le procédé 100 peut également comprendre le traitement par un anti-adhésif du clinquant métallique 220 avant le placement 110 de la membrane 240 sur la texture fibreuse 210. Le traitement du clinquant 220 par un anti-adhésif peut être réalisé en pulvérisant l'anti-adhésif sur le clinquant 220 ou en collant un film autocollant sur le clinquant 220.

La texture fibreuse pré-densifiée ou consolidée comprend par exemple des fibres de carbure de silicium. La texture fibreuse peut être réalisée par empilements de strates ou plis obtenus par tissage bidimensionnel. La texture peut également être réalisée directement en une seule pièce par tissage tridimensionnel. Par tissage bidimensionnel, on entend ici un mode de tissage classique par lequel chaque fil de trame passe d'un côté à l'autre des fils d'une seule couche de chaîne ou inversement. Par tissage tridimensionnel, on entend ici un tissage pour lequel des fils de chaîne traversent plusieurs couches de fils de trame, ou des fils de trame traversent plusieurs couches de fils de chaîne.

La texture fibreuse peut également être réalisée par des nappes de fibres unidirectionnelles, qui peuvent être obtenues par placement automatique de fibres, ou par enroulement filamentaire.

La texture fibreuse peut être pré-densifiée ou consolidée par infiltration chimique en phase vapeur (« Chemical Vapor Infiltration » ou CVI) avec le dépôt d'une interphase en nitrure de bore ou en carbone pyrolytique, puis avec le dépôt d'une couche de carbure de silicium ou de nitrure de silicium ou un mélange des deux (consolidation en phase gazeuse). Elle peut également être densifiée hors du conformateur avec du carbure de silicium pour protéger la texture lors de l'étape d'infiltration à l'état fondu.

La barbotine injectée lors de l'étape de densification 130 peut comprendre des charges céramiques avec un taux compris entre 10 % et 50 % du volume, par exemple entre 15 % et 25 % du volume, un liant avec un taux compris entre 0 % et 20 % en masse et un plastifiant avec un taux compris entre 0 % et 20 % en masse. Les charges céramiques sont par exemple de la poudre de carbure de silicium de taille d50 inférieure à 2 µm. Le liant est par exemple de l'alcool polyvinylique (PVA), du polyéthylène glycol (PEG) ou encore du glycérol. Le plastifiant est par exemple du polyéthylène glycol 200 (PEG 200). La barbotine peut également comprendre un dispersant qui peut être électrostatique, comme par exemple du tétraéthylammonium (TEAH), ou électrostérique, comme par exemple un polyétherimide (PEI), ou stérique, comme par exemple du polyvinylpyrrolidone (PvP). Elle peut également comprendre un agent mouillant.

Selon un autre mode de réalisation, la zone rigidifiée de la membrane peut être formée par un insert métallique ou un textile présent entre les deux surfaces externes de la membrane.

L'insert métallique peut par exemple être en Inconel^{®}, molybdène ou en acier.

Le textile peut par exemple être un textile consolidé, comme un textile en deux dimensions. Le textile peut être constitué de fibres de carbone ou de verre et peut comprendre une matrice epoxy.

L'expression « compris(e) entre ... et ... » doit se comprendre comme incluant les bornes.

## Revendications

1. Procédé (100) de densification d'une texture fibreuse en matériau céramique à matrice céramique mis en œuvre dans un outillage d'injection (260) comprenant :
- une cavité de moulage (263) définie entre un moule (261) et un contre-moule (262), la cavité de moulage définissant un volume interne, et
- une membrane (240) comprenant une zone rigidifiée (220), la membrane étant destinée à être placée entre une texture fibreuse (210) présente dans la cavité de moulage et le contre-moule et la zone rigidifiée de la membrane ayant un module d'Young supérieur à 200 GPa,
le procédé comprenant :
- le placement (110) d'une texture fibreuse pré-densifiée dans la cavité de moulage, la texture fibreuse pré-densifiée présentant des ondulations (211, 212) en surface, et le placement de la zone rigidifiée de la membrane sur la texture fibreuse pré-densifiée de manière à ce que la zone rigidifiée de la membrane soit en contact avec le sommet des ondulations de la texture fibreuse pré-densifiée ;
- la fermeture (120) de l'outillage d'injection en plaçant le contre-moule sur la membrane et l'application d'une pression de compaction (P_{compaction}) sur la membrane de manière à maintenir la zone rigidifiée de la membrane en contact avec le sommet des ondulations de la texture fibreuse pré-densifiée ; et
- la densification (130) de la texture fibreuse pré-densifiée par infiltration d'une barbotine dans la porosité de la texture fibreuse pré-densifiée, la barbotine étant injectée dans la chambre de moulage latéralement à la zone rigidifiée de la membrane, sous une pression d'injection (P_{injection}) telle que la différence de pression (ΔP) entre la pression de compaction et la pression d'injection est comprise entre 0,5.10⁵ Pa et 6.10⁵ Pa.

2. Procédé de densification selon la revendication 1, dans lequel la différence de pression entre la pression de compaction et la pression d'injection est comprise entre 0,5.10⁵ Pa et 1,5.10⁵ Pa.

3. Procédé de densification selon l'une quelconque des revendications 1 ou 2, dans lequel la zone rigidifiée de la membrane a une épaisseur comprise entre 50 µm et 100 µm.

4. Procédé de densification selon l'une quelconque des revendications 1 à 3, dans lequel la zone rigidifiée de la membrane est formée par un clinquant métallique placé sur une surface de la membrane en regard de la texture fibreuse.

5. Procédé de densification selon la revendication 4, dans lequel le clinquant métallique est en molybdène ou en Inconel^{®}.

6. Procédé de densification l'une quelconque des revendications 4 ou 5, dans lequel le clinquant métallique comprend un anti-adhésif sur une surface en vis-à-vis de la texture fibreuse.

7. Procédé de densification selon l'une quelconque des revendications 4 à 6, comprenant également le traitement du clinquant métallique par un anti-adhésif sous forme de spray ou de film autocollant.

8. Procédé de densification selon l'une quelconque des revendications 1 à 3, dans lequel la zone rigidifiée de la membrane est formée par un insert métallique ou un textile internes à la membrane.

9. Procédé de densification selon l'une quelconque des revendications 1 à 8, dans lequel, hors de sa zone rigidifiée, la membrane a une épaisseur comprise entre 1,5 mm et 4 mm et une dureté comprise entre 30 Shore A et 60 Shore A.

10. Procédé de densification selon l'une quelconque des revendications 1 à 9, comprenant également le séchage et le démoulage de la texture fibreuse densifiée après la densification.

11. Procédé de densification selon la revendication 10, dans lequel le séchage de la texture fibreuse est réalisé dans le moule avant le démoulage ou hors du moule après le démoulage en étuve, enceinte climatique ou par lyophilisation.

12. Procédé de densification selon l'une quelconque des revendications 1 à 11, dans lequel la barbotine comprend des charges céramiques avec un taux compris entre 10 % et 50 % du volume, un liant avec un taux compris entre 0 % et 20 % en masse et un plastifiant avec un taux compris entre 0 % et 20 % en masse.

## Patentansprüche

1. Verfahren (100) zum Verdichten einer Fasertextur aus Keramikmaterial mit keramischer Matrix, das in einem Spritzgusswerkzeug (260) durchgeführt wird, umfassend:
- einen Formhohlraum (263), der zwischen einer Form (261) und einer Gegenform (262) definiert ist, wobei der Formhohlraum ein Innenvolumen definiert, und
- eine Membran (240), umfassend einen versteiften Bereich (220), wobei die Membran dazu bestimmt ist, zwischen einer Fasertextur (210), die in dem Formhohlraum vorhanden ist, und der Gegenform platziert zu werden, und der versteifte Bereich der Membran einen Young'schen Modul von mehr als 200 GPa aufweist,
das Verfahren umfassend:
- Platzieren (110) einer vorverdichteten Fasertextur in dem Formhohlraum, wobei die vorverdichtete Fasertextur an der Oberfläche Wellen (211, 212) aufweist, und Platzieren des versteiften Bereichs der Membran auf der vorverdichteten Fasertextur, sodass der versteifte Bereich der Membran mit dem Scheitelpunkt der Wellen der vorverdichteten Fasertextur in Kontakt ist;
- Schließen (120) des Spritzgusswerkzeugs durch Platzieren der Gegenform auf der Membran und Ausüben eines Verdichtungsdrucks (P_{verdichtung}) auf die Membran, um den versteiften Bereich der Membran in Kontakt mit dem Scheitelpunkt der Wellen der vorverdichteten Fasertextur zu halten; und
- Verdichten (130) der vorverdichteten Fasertextur durch Infiltration eines Schlickers in die Porosität der vorverdichteten Fasertextur, wobei der Schlicker in die Formkammer seitlich von dem versteiften Bereich der Membran unter einem solchen Einspritzdruck (P_{Einspritzung}) eingespritzt wird, dass die Druckdifferenz (ΔP) zwischen dem Verdichtungsdruck und dem Einspritzdruck zwischen 0,5.10⁵ Pa und 6.10⁵ Pa ist.

2. Verdichtungsverfahren nach Anspruch 1, wobei die Druckdifferenz zwischen dem Verdichtungsdruck und dem Einspritzdruck zwischen 0,5.10⁵ Pa und 1,5.10⁵ Pa ist.

3. Verdichtungsverfahren nach einem der Ansprüche 1 oder 2, wobei der versteifte Bereich der Membran eine Stärke zwischen 50 µm und 100 µm aufweist.

4. Verdichtungsverfahren nach einem der Ansprüche 1 bis 3, wobei der versteifte Bereich der Membran durch eine metallische Beilage gebildet wird, der auf einer Oberfläche der Membran gegenüber der Fasertextur platziert ist.

5. Verdichtungsverfahren nach Anspruch 4, wobei die metallische Beilage aus Molybdän oder Inconel^{®} ist.

6. Verfahren zum Verdichten irgendeines der Ansprüche 4 oder 5, wobei die metallische Beilage ein Trennmittel auf einer Oberfläche gegenüber der Fasertextur umfasst.

7. Verdichtungsverfahren nach einem der Ansprüche 4 bis 6, ferner umfassend die Behandlung der metallischen Beilage mit einem Trennmittel in Form eines Sprays oder einer selbstklebenden Folie.

8. Verdichtungsverfahren nach einem der Ansprüche 1 bis 3, wobei der versteifte Bereich der Membran durch einen Metalleinsatz oder ein Textil innerhalb der Membran gebildet ist.

9. Verdichtungsverfahren nach einem der Ansprüche 1 bis 8, wobei die Membran außerhalb ihres versteiften Bereichs eine Stärke zwischen 1,5 mm und 4 mm und eine Härte zwischen 30 Shore A und 60 Shore A aufweist.

10. Verdichtungsverfahren nach einem der Ansprüche 1 bis 9, ferner umfassend das Trocknen und Entformen der verdichteten Fasertextur nach der Verdichtung.

11. Verdichtungsverfahren nach Anspruch 10, wobei das Trocknen der Fasertextur in der Form vor dem Entformen oder außerhalb der Form nach dem Entformen in einem Trockenschrank, Klimakammer oder durch Gefriertrocknung durchgeführt wird.

12. Verdichtungsverfahren nach einem der Ansprüche 1 bis 11, wobei der Schlicker keramische Füllstoffe mit einem Anteil zwischen 10 % und 50 % des Volumens, ein Bindemittel mit einem Anteil zwischen 0 % und 20 % Masse und einen Weichmacher mit einem Anteil zwischen 0 % und 20 % Masse umfasst.

## Claims

1. A method (100) for densifying a fibrous texture made of ceramic material with a ceramic matrix used in injection equipment (260) comprising:
- a mold cavity (263) defined between a mold (261) and a counter-mold (262), the mold cavity defining an internal space, and
- a membrane (240) comprising a stiffened zone (220), the membrane being intended to be placed between a fibrous texture (210) present in the mold cavity and the counter-mold, and the stiffened zone of the membrane having a Young's modulus greater than 200 GPa,
the method comprising:
- placing (110) a predensified fibrous texture in the mold cavity, the predensified fibrous texture having corrugations (211, 212) on the surface and placing the stiffened zone of the membrane on the predensified fibrous texture in such a way that the stiffened zone of the membrane is in contact with the peaks of the corrugations of the predensified fibrous texture;
- closing (120) the injection equipment by placing the counter-mold on the membrane and applying a compaction pressure (P_{compaction}) to the membrane so as to keep the stiffened zone of the membrane in contact with the peaks of the corrugations of the predensified fibrous texture; and
- densifying (130) the predensified fibrous texture by infiltrating a slip into the porosity of the predensified fibrous texture, the slip being injected into the mold chamber laterally to the stiffened zone of the membrane at an injection pressure (P_{injection}) such that the difference in pressure (ΔP) between the compaction pressure and the injection pressure is between 0.5 x 10⁵ Pa and 6 x 10⁵ Pa.

2. The densification method according to claim 1, wherein the difference in pressure between the compaction pressure and the injection pressure is between 0.5 x 10⁵ Pa and 1.5 x 10⁵ Pa.

3. The densification method according to any one of claims 1 or 2, wherein the stiffened zone of the membrane has a thickness of between 50 µm and 100 µm.

4. The densification method according to any one of claims 1 to 3, wherein the stiffened zone of the membrane is formed by a metal foil placed on a surface of the membrane opposite the fibrous texture.

5. The densification method according to claim 4, wherein the metal foil is made of molybdenum or Inconel^{®}.

6. The densification method according to any one of claims 4 or 5, wherein the metal foil comprises an anti-adhesive coating on a surface facing the fibrous texture.

7. The densification method according to any one of claims 4 to 6, also comprising treating the metal foil with an anti-adhesive coating in the form of a spray or self-adhesive film.

8. The densification method according to any one of claims 1 to 3, wherein the stiffened zone of the membrane is formed by a metal insert or a textile internal to the membrane.

9. The densification method according to any one of claims 1 to 8, wherein, outside its stiffened zone, the membrane has a thickness of between 1.5 mm and 4 mm and a hardness of between 30 Shore A and 60 Shore A.

10. The densification method according to any one of claims 1 to 9, also comprising drying and demolding the densified fibrous texture after densification.

11. The densification method according to claim 10, wherein the drying of the fibrous texture is carried out in the mold before demolding or outside the mold after demolding in an oven, climatic chamber or by freeze-drying.

12. The densification method according to any one of claims 1 to 11, wherein the slip comprises ceramic fillers with a rate of between 10% and 50% of the volume, a binder with a rate of between 0% and 20% by mass and a plasticizer with a rate of between 0% and 20% by mass.
